# EUROPÄISCHE PATENTSCHRIFT

(11) **EP 1 112 876 B1**
(45) Veröffentlichungstag und Bekanntmachung des Hinweises auf die Patenterteilung: **08.03.2006**
(21) Anmeldenummer: 00127686.4
(22) Anmeldetag: 18.12.2000
(51) Int. Cl.: B60J 7/00

(54) **Sonnenschutzvorrichtung für einen lichtdurchlässigen Fahrzeugdachbereich**
Sunshield device for transparent region of vehicle roof
Dispositif pare-soleil pour une région transparente de toit de véhicule

(30) Priorität: 27.12.1999 JP 37137699
(43) Veröffentlichungstag der Anmeldung: 04.07.2001
(73) Patentinhaber: Webasto Vehicle Systems International GmbH, 82131 Stockdorf (DE)
(72) Erfinder: Tanaka, Hiroshi, c/o Webasto Japan Co. Ltd., Higashi-Hiroshima-shi, Hiroshima (JP)
(74) Vertreter: Wiese, Gerhard

(56) Entgegenhaltungen:
- EP-A- 0 644 075
- FR-A- 1 124 226
- US-A- 5 893 603

## Beschreibung

Die vorliegende Erfindung betrifft eine Sonnenschutzvorrichtung für einen lichtdurchlässigen Fahrzeugdachbereich, insbesondere einen Deckel eines öffnungsfähigen Fahrzeugdaches, gemäß dem Oberbegriff der Ansprüche 1, 12 bzw. 27.

Eine solche gattungsgemäße Sonnenschutzvorrichtung ist aus der DE 195 34 288 C1 bekannt, wobei es sich bei dem Abdeckelement um eine auf eine vorgespannte Walze aufwickelbare Rollobahn handelt, deren freies Ende von einem Festelement gebildet wird, welches zwei sich in seitlicher Richtung erstreckende und nach außen vorgespannte Riegelstangen trägt, die für einen Eingriff mit jeweils einem Loch einer jeweils seitlich der Rollobahn angeordneten Lochleiste ausgebildet sind. Auf diese Weise kann das Festelement in Zwischenstellungen des Rollos arretiert werden, wobei die Arretierung durch einen manuellen Druck auf ein Betätigungselement, welches die Riegelstangen entgegen ihrer Vorspannung wieder aus den Löchern der Lochleiste herausbewegt, gelöst werden kann.

Aus der DE 198 60 826 A1 ist eine Sonnenschutzvorrichtung für einen lichtdurchlässigen Fahrzeugdachbereich bekannt, welche ein Rollo mit einer Wickelrolle umfasst, das an seiner freien Kante eine selbsthemmend in seitlichen Schiebeführungen laufende, griffbestückte Spannleiste trägt, an der Drehmoment übertragend mit der Wickelrolle verbundene, über eine Umlenkrolle geführte Zugbänder angreifen. Das Rollo und die Zugbänder sind durch eine Federanordnung unter Spannung gehalten. Die selbsthemmende Führung beinhaltet eine derart eingestellte Reibung oder derart ausgelegte Rasten, dass die im normalen Fahrbetrieb auftretenden Erschütterungen nicht ausreichen, um die Spannleiste und damit das Rollo aus der einmal manuell eingestellten Lage zu bewegen.

Es ist Aufgabe der vorliegenden Erfindung, eine Sonnenschutzvorrichtung für einen lichtdurchlässigen Fahrzeugdachbereich zu schaffen, welche einfach zu bedienen ist, einfach aufgebaut ist und zuverlässig funktioniert.

Diese Aufgabe wird gelöst durch eine Sonnenschutzvorrichtung, wie sie in den Ansprüchen 1, 12 bzw. 27 definiert ist.

Bei der Lösung gemäß Anspruch 1 ist besonders vorteilhaft, dass die Arretierungskraft durch entsprechende Auslegung der Anlagefläche, des Arretierungselements und der Vorspannanordnung festgelegt werden kann, was für eine zuverlässige Funktion der Sonnenschutzvorrichtung sorgt.

Bei der Lösung gemäß Anspruch 12 ist vorteilhaft, dass die Arretierung auf einfache Weise manuell wieder gelöst werden kann, indem das Arretierungselement nach oben bzw. nach unten gedrückt wird.

Bei der Lösung gemäß Anspruch 27 ist die einfache konstruktive Gestaltung vorteilhaft.

Bevorzugte Ausführungsformen der Erfindung ergeben sich aus den Unteransprüchen.

Die Erfindung wird anhand der beigefügten Zeichnungen beispielhaft näher erläutert. Es zeigen:
- Fig. 1: eine Aufsicht auf eine Sonnenschutzvorrichtung gemäß einer ersten Ausführungsform;
- Fig. 2: eine auseinandergezogene perspektivische Ansicht der Arretierungseinrichtung der Sonnenschutzvorrichtung von Fig. 1;
- Fig. 3: eine Vorderansicht der Arretierungseinrichtung von Fig. 2;
- Fig. 4: eine Seitenansicht der Arretierungseinrichtung von Fig. 2;
- Fig. 5: eine perspektivische, teilweise auseinandergezogen dargestellte Ansicht der Aufwickelvorrichtung der Sonnenschutzvorrichtung;
- Fig. 6: eine Seitenansicht, teilweise im Schnitt dargestellt, eines öffnungsfähigen Fahrzeugdaches in mehreren Stellungen;
- Fig. 7: eine Aufsicht auf das Fahrzeugdach von Fig. 6;
- Fig. 8: eine Ansicht wie Fig. 2, wobei jedoch eine zweite Ausführungsform der Erfindung dargestellt ist;
- Fig. 9: eine Ansicht wie Fig. 2, wobei jedoch eine dritte Ausführungsform der Erfindung dargestellt ist;
- Fig. 10: eine Ansicht wie Fig. 2, wobei jedoch eine vierte Ausführungsform der Erfindung dargestellt ist; und
- Fig. 11: eine Ansicht wie Fig. 2, wobei jedoch eine fünfte Ausführungsform der Erfindung dargestellt ist.

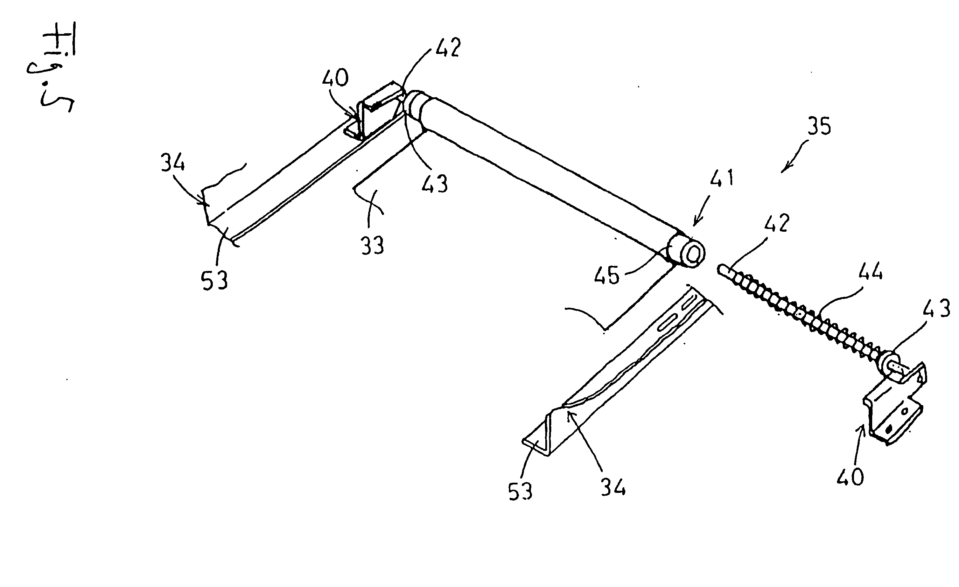

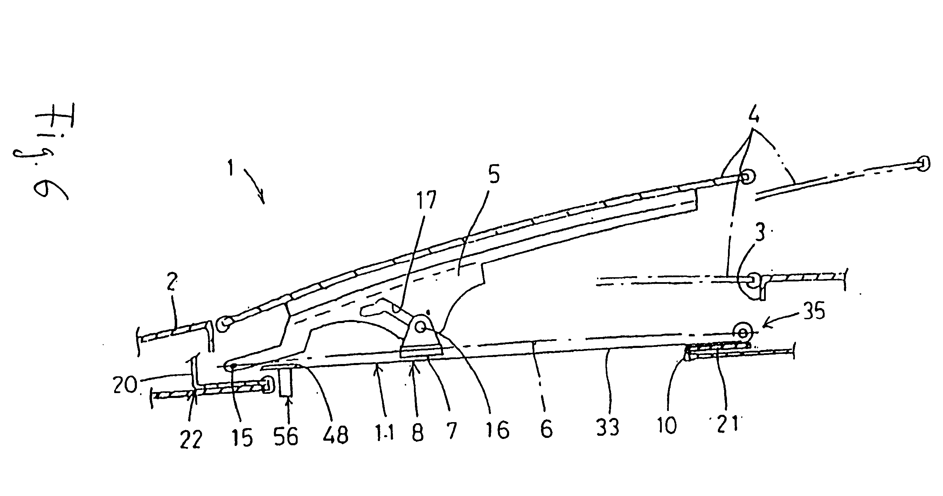

Gemäß den Figuren 6 und 7 ist ein öffnungsfähiges Fahrzeugdach, das als Spoilerdach ausgebildet ist, in einer Öffnung in einer festen Dachhaut 2 eines Fahrzeugs, wie beispielsweise eines Personenkraftfahrzeugs, montiert. Das Fahrzeugdach 1 umfasst einen Deckel 1 zum Freilegen oder Schließen einer in der festen Dachhaut 2 ausgebildeten Dachöffnung 3. Ein rechtes und ein linkes Kulissenelement 5 sind jeweils auf der Unterseite des Deckels 4 auf dessen rechter bzw. linker Seite angeordnet. Eine Führungsschiene 6 ist vorgesehen, um einen vorderen Abschnitt des rechten und des linken Kulissenelements 5 in Dachlängsrichtung gleitend zu führen. Ferner ist ein Antriebselement 8 vorgesehen, um das Kulissenelement 5 anzuheben oder abzusenken oder dieses in angehobenem Zustand nach hinten zu bewegen, indem ein Gleiter 7, der in der Führungsschiene 6 gleitend geführt ist, nach hinten bzw. nach vorn bewegt wird. Ferner ist eine Abdeckvorrichtung 9 zwischen der Führungsschiene 6 und dem Deckel 4 angeordnet. Eine Sonnenschutzanordnung 11 ist unterhalb der Dachöffnung 3 vorgesehen, um eine innere Öffnung 10 freizugeben oder zu verschließen. Zusätzlich ist ein Windabweise 12 vorgesehen, welcher sich am vorderen Rand der Öffnung 3 aufstellt, wenn die Öffnung 3 freigelegt ist.

Der Deckel 4 ist aus transparentem bzw. lichtdurchlässigem Glas oder Kunststoff gefertigt und ist mit einem Deckelrahmen versehen, welcher im Randbereich der Unterseite des Deckels befestigt ist und ferner mit dem rechten und linken Kulissenelement 5 mittels Bolzen fest verbunden ist.

Jedes Kulissenelement 5 weist in seinem vorderen Abschnitt einen Schuh 15, der sich in der Führungsschiene 6 gleitend bewegt, sowie in seinem mittleren Abschnitt einen Kulissenschlitz 17 auf, welcher in Eingriff mit einem Kulissenstift 16 des Gleiters 7 steht. Der Kulissenstift 16 und der Kulissenschlitz 17 sind Komponenten der Antriebseinrichtung 8.

Der Deckel 4 kann aus der in Fig. 6 gestrichelt dargestellten Schließstellung, in welcher er die Dachöffnung 3 vollständig verschließt, in eine ausgestellte bzw. angehobene Position gebracht werden (in Fig. 6 mit durchgezogenen Linien dargestellt), indem der Kulissenstift 16 mittels des Gleiters 7 in Längsrichtung gleitend in dem Kulissenschlitz 17 verschoben wird. Der Deckel 4 kann nach hinten in eine Stellung geschoben werden, in welcher die Dachöffnung 3 vollständig freigelegt ist (in Fig. 6 gestrichelt dargestellt), indem der Kulissenstift 16 von der Stelle aus, welche der ausgestellten Position des Deckels 4 entspricht, weiter nach hinten verschoben wird. Der Deckel 4 wird aus seiner vollständig geöffneten Stellung in die vollständig geschlossene Stellung gebracht, indem der Gleiter 7 nach vorn bewegt wird.

Die Antriebsvorrichtung 8 ist in an sich bekannter Weise ausgebildet, wobei je ein Antriebskab 18 mit dem linken bzw. rechten Gleiter 7 verbunden ist und wobei ein von einem Motor 19 angetriebenes Antriebsritzel in Eingriff mit den Antriebskabeln 18 steht, um diese anzutreiben.

Die linke und die rechte Führungsschiene 6 sind miteinander mittels eines vorderen Rahmenbauteils 20 und eines mittleren Rahmenbauteils 21 verbunden und bilden zusammen mit diesen einen Basisrahmen 22 für das Fahrzeugdach 1, welcher an der Unterseite der festen Dachhaut 2 befestigt ist. Eine innere Fläche des Rahmens 22 entspricht der inneren Öffnung 10. Ein Wasserrinnenbereich ist entlang der linken und der rechten Führungsschiene 6 und dem vorderen Rahmenbauteil 20 ausgebildet, so dass Regenwasser über das hintere Ende der Führungsschiene 6 abfließen kann.

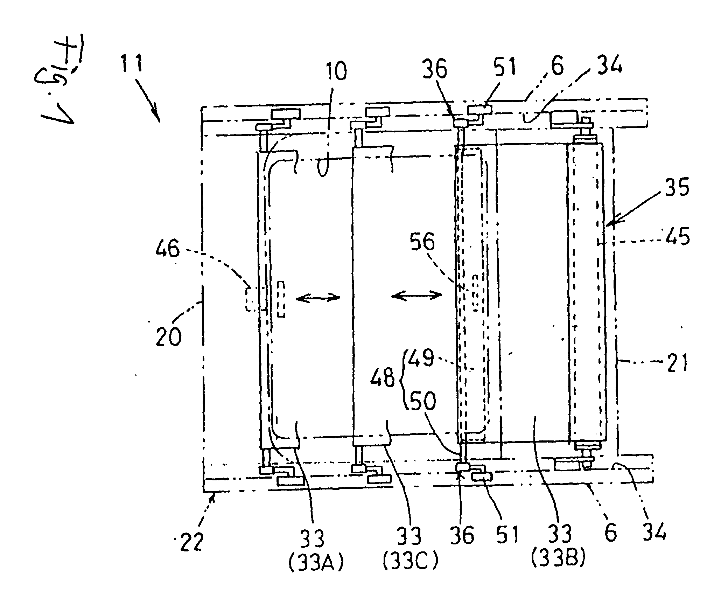

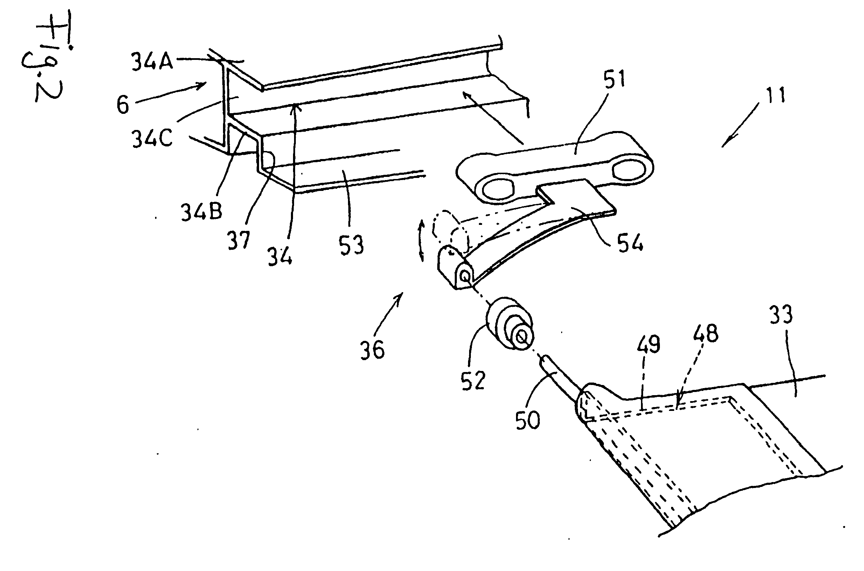

Gemäß den Figuren 1 bis 4 weist die Sonnenschutzvorrichtung 11 ein Hauptabdeckelement 33 zum Freilegen oder Verschließen der Öffnung 10, eine Führungsschiene 34 zum gleitenden Führen des Abdeckelements 33 in der Öffnungs- bzw. Schließrichtung (d.h. in Längsrichtung); eine Aufwickeleinrichtung 35 zum Aufwickeln des Abdeckelements 33 sowie ein Arretierungselement 36 zum Arretieren des Abdeckelements 33 in einer Zwischenstellung der Öffnungs-/Schließbewegung, wodurch die Öffnung 10 zum Teil freigelegt wird.

Diese Führungsschiene 34 ist bezüglich der Führungsschiene 6 für den Deckel 4 innenliegend einstückig mit dieser oder separat davon als eine Komponente eines Paars aus linker und rechter Führungsschiene vorgesehen und ist als Nut mit C-förmigem Querschnitt mit einer oberen Wand 34A, einer unteren Wand 34B, einer Seitenwand 34C sowie einer nach innen gerichteten Öffnung bzw. offenen Seite ausgebildet.

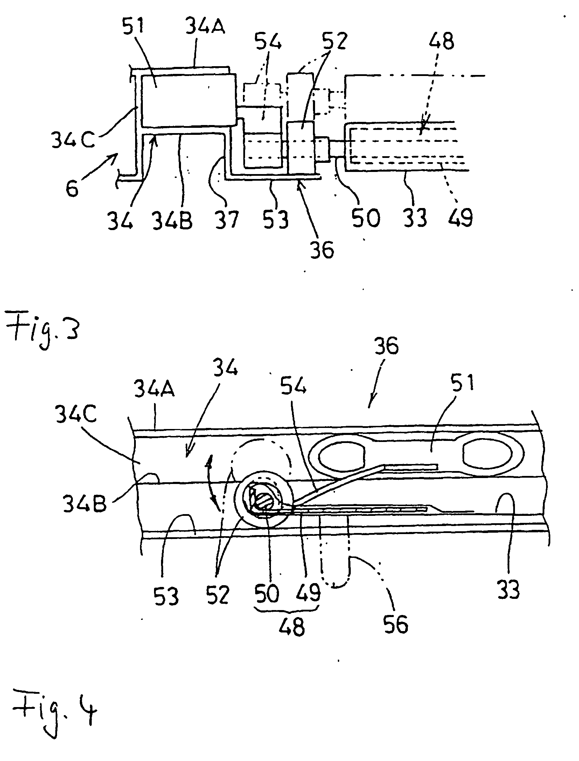

Ferner ist eine langgestreckte Anlagefläche 53, welche als Komponente der Arretierungseinrichtung 36 ausgebildet ist und nachfolgend detaillierter beschrieben wird, ist auf der inneren Seite der unteren Wand 34B vorgesehen, wobei die Anlagefläche 53 mittels einer senkrechten Wand 37, die sich von der unteren Wand 34B nach unten erstreckt, mit der unteren Wand 34B nach Art einer Stufe in einstückiger Weise verbunden ist. Alternativ kann die Anlagefläche 53 getrennt von der Führungsschiene 34 ausgebildet sein. Die Aufwickeleinrichtung 35 weist gemäß Fig. 5 eine Wickelwelle 41 auf, die im hinteren Bereich der linken und der rechten Führungsschiene 34 (d.h. im hinteren Bereich der Anlagefläche 53) mittels Befestigungsklammern 40 montiert ist, d.h. die Wickelwelle 41 ist im hinteren Bereich der Öffnung 10 zwischen der linken und der rechten Führungsschiene 34 angeordnet.

Die Wickelwelle 41 umfasst zwei Lagerachsen 42, die jeweils an ihrem linken bzw. rechten äußeren Ende mit der linken bzw. rechten Klammer 40 fest, d.h. nicht drehend, verbunden sind; zwei Kappenbauteile 43, die jeweils drehbar auf der Umfangsfläche des linken bzw. rechten äußeren Endes der Lagerachsen 42 gelagert sind; zwei Vorspannbauteile oder Schraubenfedern, welche jeweils auf dem Außenumfang der Lagerachsen 42 vorgesehen sind, wobei das linke bzw. rechte äußere Ende der Feder mit dem jeweiligen Kappenbauteil 43 und das innere Ende der jeweiligen Feder mit der Lagerachse 42 verbunden ist; sowie eine zylindrische Hülse 45, in welche die Lagerachsen 42 und die Vorspannbauteile 44 eingeführt sind und deren jedes Ende mit einem der Kappenbauteile 43 in drehfester Weise verbunden ist.

Das Abdeckelement 43 ist als eine Bahn aus z.B. Segeltuch, Leder, Kunststoff oder einem sonstigen Gewebe ausgebildet und kann auf die Hülse 45 aufgewikkelt werden. Die Federn 44 sorgen für eine Vorspannung der Hülse 45 in Aufwikkelrichtung, so dass das Abdeckelement 33 aus dem aufgewickelten Zustand nach vorn herausgezogen werden kann, um die Öffnung 10 abzudecken, wobei sich durch diese Abwickelbewegung die Vorspannkraft der Hülse 45 aufbaut. Aufgrund dieser Vorspannkraft wird das Abdeckelement 33 beim Freilegen der Öffnung 10 wieder auf die Hülse 45 selbsttätig aufgewickelt.

Wie in Fig. 1 gezeigt, ist ein Anschlagbauteil 46 vorgesehen, um in Eingriff mit dem vorderen Rand des Abdeckelements 33 zu treten, um dieses im herausgezogenen Zustand zu halten (der vollständig geschlossene Zustand der Öffnung 10 ist in Fig. 1 mit dem Bezugszeichen 33A bezeichnet). Das Anschlagbauteil 46 ist hinsichtlich der Querrichtung in der Mitte des vorderen Rahmenbauteils 20 oder in dem vorderen Abschnitt der Führungsschiene 34 vorgesehen. Ein weiteres (nicht gezeigtes) Anschlagbauteil ist im hinteren Bereich der Führungsschiene 34 vorgesehen, um eine Begrenzung des Aufwickelns des Abdeckelements 33 im voll geöffneten Zustand der Öffnung 10 (in Fig. 1 mit dem Bezugszeichen 33B bezeichnet) festzulegen. Das Abdeckelement 33 ist an seinem vorderen Ende in Querrichtung mit einem Festelement 48 versehen, um das Abdeckelement 33 in Form zu halten. Das Festelement 48 ist aus Metall, Kunststoff oder ähnlichem gefertigt und ist an seiner Unterseite an dem Abdeckelement 33 befestigt und von diesem umgeben.

Das Festelement 48 weist ein als Streifen in Querrichtung verlaufendes Hauptelement 49 und eine Eingriffstange 50 auf, die an dem vorderen Rand des Hauptbauteils 49 in Querrichtung verläuft, wobei das linke und rechte Ende jeweils über das Abdeckelement 33 hinaus ragt.

Wie in Fig. 2 bis 4 gezeigt, ist ein Führungsschuh 51 mit dem herausragenden Ende der Eingriffsstange 50 über ein Arretierungselement 52 und ein Vorspannelement 54 verbunden, so dass die in Längsrichtung verlaufende Öffnungs-/Schließbewegung des Abdeckelements 33 mittels des Eingriffs des Führungsschuhs 51 in die Nut der Führungsschiene 34 in Längsrichtung geführt ist.

Die Arretierungseinrichtung 36 umfasst ein Paar von Arretierungselementen 52, die jeweils an einem Ende der Eingriffsstange 50 befestigt sind, sowie die beiden Anlageflächen 53, die sich jeweils in Längsrichtung an der linken bzw. rechten Seite des Abdeckelements 33 in Öffnungs-/Schließrichtung erstrecken, so dass eine Reibungskraft erzeugt werden kann, indem das Arretierungselement 52 in Kontakt mit der Anlagefläche 53 gebracht wird.

Das Arretierungselement 52 ist als Bremsschuh mit zylindrischer Form ausgebildet und ist aus einem Material mit hohem Reibungskoeffizienten, wie beispielsweise Gummi, gefertigt. Das Arretierungselement 52 ist an der Eingriffsstange 50 drehfest angebracht, wobei das Arretierungselement 52 auf der nach oben weisenden Seite der Anlagefläche 53 anliegt.

Das Ende der Eingriffsstange 50 durchquert das Arretierungselement 52, wobei das hervorstehende Ende mit dem vorderen Ende des Vorspannelements 54 verbunden ist, dessen hinteres Ende mit dem Führungsschuh 51 verbunden ist. Das Vorspannelement 54 und der Führungsschuh 51 können separat gefertigt sein, um danach miteinander verbunden zu werden, oder sie können alternativ als einstückige Einheit aus Kunststoff oder ähnlichem gefertigt sein.

Da die Vertikalbewegung des Führungsschuhs 51 durch die Führungsschiene 34 begrenzt wird und das Vorspannelement 54 das Arretierungselement 52 mit einer Vorspannkraft nach unten beaufschlagt, wird das Arretierungselement 52 in Andrückkontakt mit der Oberseite der Anlagefläche 53 gebracht. Die zwischen dem Arretierungselement 52 und der Anlagefläche 53 erzeugte Reibungskraft wird so eingestellt, dass sie größer als die von der Vorspanneinrichtung 44 der Aufwikkeleinrichtung 35 erzeugte Vorspannkraft (Aufwickelkraft) ist, so dass das Abdekkelement 33 mittels dieser Reibungskraft arretiert werden kann, um die Öffnungs- bzw. Schließbewegung zu stoppen.

Das Arretierungselement 52 kann um den Führungsschuh 51 herum, der dadurch einen Drehpunkt bildet, verschwenkt werden, indem die Eingriffsstange 50 bzw. das Festelement 48 gegen die Vorspannung des Vorspannelements 54 nach oben angehoben wird, wobei dieser Aufwärtsschwenk bewirkt, dass das Arretierungselement 52 von der Anlagefläche 53 freikommt, wodurch die Reibungskraft aufgehoben wird und eine Öffnungs-/Schließbewegung des Abdeckelements 33 ermöglicht wird.

Ein hervorstehendes Griffelement 56 zum Bewirken der Öffnungs-/Schließbewegung des Abdeckelements 33 ist an der Unterseite des Festelements 48 ungefähr in der Mitte desselben vorgesehen, so dass die Öffnung 10 durch Ergreifen dieses Griffelements 56 freigelegt oder geschlossen werden kann, indem das Abdeckelement 33 nach hinten oder nach vorn bewegt wird. Ferner kann durch Ergreifen des Griffelements 56 und Anheben des Festelements 48 (d.h. des vorderen Endes des Abdeckelements 33) das Arretierungselement 52 von der Anlagefläche 53 gelöst werden. Auf diese Weise bilden das Griffelement 56 und das Festelement 48 eine Betätigungseinrichtung, welche es erlaubt, das Arretierungselement 52 vertikal zu bewegen und dadurch von der Anlagefläche 53 zu lösen.

Im folgenden wird ein Verfahren zum Freilegen bzw. Schließen der Öffnung 10 mittels des Abdeckelements 33 beschrieben. Wenn die Öffnung 10 vollständig von dem Abdeckelement 33 abgedeckt ist, wird zunächst das Abdeckelement 33 durch Ergreifen und Halten des Griffelements 56 nach vorn herausgezogen, wobei das vordere Ende des Abdeckelements 33 angehoben wird, bis das vordere Ende des Abdeckelements 33 mit dem vorderen Anschlagelement 46 in Eingriff gebracht wird. Wenn die Öffnung 10 wieder freigelegt werden soll, wird das Abdeckelement 33 aus dem Eingriff mit dem Anschlagelement 46 gelöst und das vordere Ende des Abdeckelements 33 wird nach oben angehoben und in diesem Zustand mittels des Griffelements 56 gehalten, um ein Aufwickeln des Abdeckelements 33 mittels der Vorspannkraft der Aufwickeleinrichtung 35 zu ermöglichen.

Da die Arretierungseinrichtung 36 durch Anheben des vorderen Endes des Abdeckelements 33 entgegen der durch das Vorspannelement 54 erzeugten Vorspannung leicht aus dem Eingriff gelöst werden kann, kann das Griffelement 56 nicht nur zum Verstellen des Abdeckelements 33 zwecks Öffnen oder Schließen der Öffnung 10, sondern auch zum Lösen der Arretierung verwendet werden, wodurch die Bedienungsfreundlichkeit der Sonnenschutzvorrichtung beträchtlich verbessert wird. Da ferner der Führungsschuh 51 mittels des Arretierungselements 52 und des Vorspannelements 54 an dem Abdeckelement 33 befestigt ist, können sie mittels einer einfachen Struktur verbunden werden. Da andererseits ein Ende des Vorspannelements 54 an dem Führungsschuh 51 befestigt ist, dessen vertikale Bewegung durch die Führungsschiene 34 begrenzt ist, kann das Arretierungselement 52 auf einfache Weise mit der Vorspannkraft beaufschlagt werden.

Da die Anhebebewegung des vorderen Endes des Abdeckelements 33 beendet wird, wenn das Griffelement 56 beim Schließen der Öffnung 10 zufällig losgelassen wird, wird das Arretierungselement 52 automatisch mittels der von dem Vorspannelement 54 erzeugten Vorspannkraft in Andrückkontakt mit der Anlagefläche 53 gebracht, wodurch das Abdeckelement 33 in seiner Bewegung abgebremst wird und an Ort und Stelle gehalten wird. Folglich kann das Problem vermieden werden, dass sich das Abdeckelement 33 automatisch aufwickelt und der Schließvorgang ganz von neuem begonnen werden muss; statt dessen kann der Schließvorgang aus der festgehaltenen Zwischenstellung erneut gestartet werden.

Da ferner das Abdeckelement 33 in seiner Position arretiert wird, wenn das Griffelement 56 während des Öffnungsvorgangs aus der vollständig geschlossenen Stellung losgelassen wird, kann das Problem vermieden werden, dass das schnelle Aufwickeln des Abdeckelements 33 Lärm verursacht oder zu einer Beschädigung der Komponenten führt.

Da außerdem das Abdeckelement 33 stufenlos in jeder beliebigen Zwischenstellung zwischen dem vollständig geschlossenen und dem vollständig geöffneten Zustand mittels der Arretierungseinrichtung 36 arretiert werden kann, kann die Öffnung 10 wie in Fig. 1 durch das Bezugszeichen 33C angedeutet in einem gewünschten halb geöffneten Zustand gehalten werden, so dass der Tageslichteinfall und die Entlüftung wunschgemäß gesteuert werden können.

Statt wie in der beschriebenen Ausführungsform als Zylinder ausgebildet zu sein, kann das Arretierungselement 52 als Block, wie beispielsweise als Hexaeder, oder als Platte ausgebildet sein, um die Reibungsfläche im Kontakt mit der Anlagefläche 53 zu erhöhen. Um ferner den Reibewiderstand der Anlagefläche 53 zu erhöhen, kann eine Gummilage oder eine andere Oberflächenbehandlung der Anlagefläche 53 vorgesehen sein.

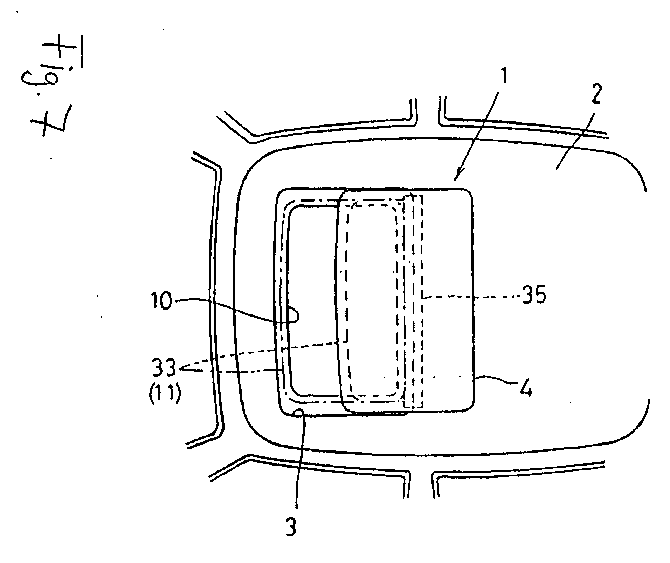

Die Anlagefläche 53 und das Verriegelungselement 52 können beispielsweise gemäß den in den Figuren 8, 9 und 11 gezeigten Ausführungsformen abgewandelt werden. Bei der Ausführungsform gemäß Fig. 8 ist das Arretierungselement 52 als Block mit einer Vielzahl von in Querrichtung verlaufenden Zähnen 60 versehen, wobei die Anlagefläche 53 umgekehrt mit entsprechenden Zähnen 61 versehen ist, die mit den Zähnen 60 des Arretierungselements 52 in Eingriff treten können. Wenn die Zähne 60 des Arretierungselements 52 und die Zähne 61 der Anlagefläche 53 miteinander in Eingriff gebracht werden, entsteht zwischen ihnen eine Eingriffskraft, die größer als die Vorspannkraft der Aufwickeleinrichtung 35 ist, wodurch das Abdeckelement 33 arretiert werden kann, um seine Offnungs-/Schließbewegung zu unterbrechen.

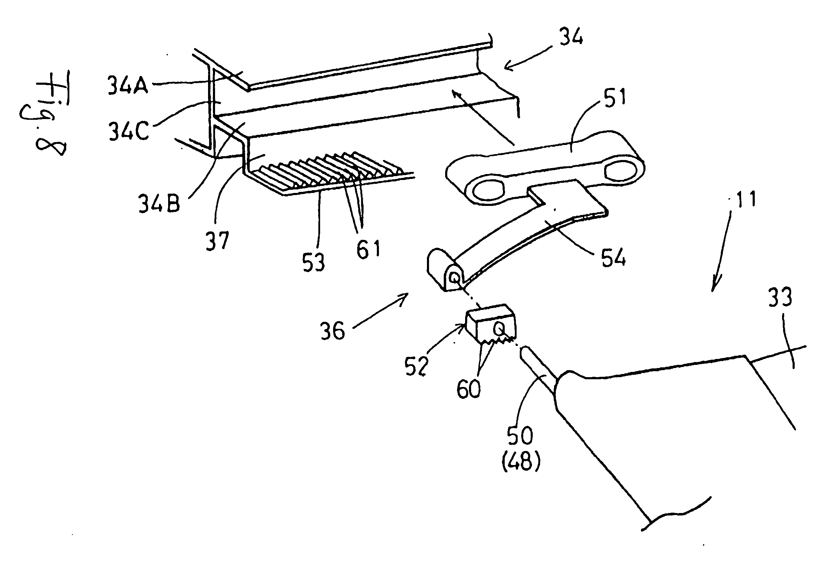

Bei der Ausführungsform gemäß Fig. 9 ist ein Eingriffsvorsprung 62 vorgesehen, der sich von der Unterseite des Arretierungselements 52 nach unten erstreckt, wobei eine Mehrzahl von Eingriffslöchern 63 in der Anlagefläche 53 entlang deren Längsrichtung ausgebildet ist. Die Löcher 63 sind so ausgebildet, dass der Eingriffsvorsprung 63 in sie eingeführt werden kann. Die Anlagefläche 53 kann bei dieser Ausführungsform als Arretierungsschiene betrachtet werden. Die Eingriffslöcher bzw. Ausnehmungen 63 weisen mit ihrer offenen Seite nach oben. Ähnlich wie bei der zuletzt geschilderten Ausführungsform greift der Eingriffsvorsprung 62 des Arretierungselements 52 aufgrund der von dem Vorspannelement 54 vermittelten Vorspannkraft in eines der Eingriffslöcher 63 ein, wobei eine Eingriffskraft erzeugt wird, die größer als die von der Aufwickeleinrichtung 35 erzeugten Vorspannkraft ist, wodurch das Abdeckelement 33 arretiert werden kann, um seine Öffnungs-/Schtießbewegung zu stoppen.

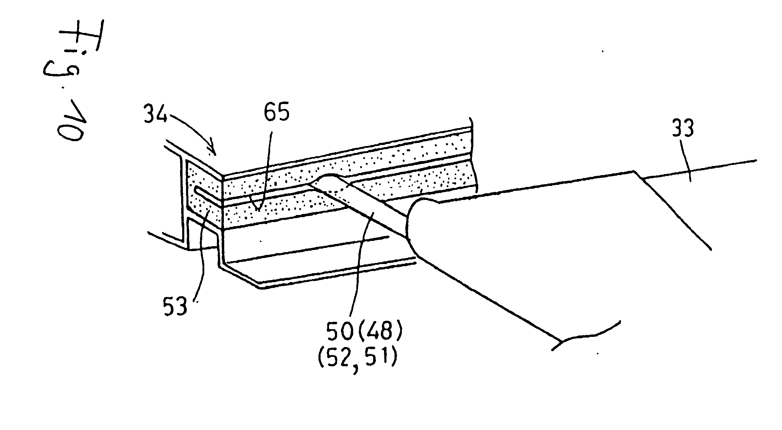

Gemäß Fig. 11 kann die Arretierungsschiene 53 so abgewandelt sein, dass die Ausnehmungen 63 nicht nur nach oben bzw. unten, sondern auch zur Innenseite des Fahrzeugdaches hin offen sind, wodurch eine Rechteckkurven-artige Kontur entsteht, im Gegensatz zu den rechteckigen Löchern 63 gemäß der Ausführungsform von Fig. 9.

Ansonsten entsprechen die zuletzt beschriebenen Ausführungsformen im wesentlichen der Ausführungsform gemäß Fig. 2. Obschon die zuletzt geschilderten Ausführungsformen für einen ähnlichen Effekt sorgen, wird die Ausführungsform gemäß Fig. 2 bevorzugt, da bei der Ausführungsform gemäß Fig. 8 die Zähne 60, 61 als zusätzliche Elemente erforderlich sind und bei der Ausführungsform gemäß Fig. 9 und 11 der Eingriffsvorsprung 62 und die Ausnehmungen 63 als zusätzliche Elemente erforderlich sind und eine stufenlose Positionseinstellung des Abdeckelements 33 bei dieser Ausführungsform aufgrund der Ausbildung der Ausnehmungen 63 nicht möglich ist.

Bezüglich der Ausführungsform gemäß Fig. 9 ist anzumerken, dass die Rolle der Ausnehmungen und des Eingriffsvorsprungs vertauscht werden können, d.h. das Arretierungselement 52 kann mit einer Ausnehmung bzw. einem Loch versehen sein, in welches an der Anlagefläche bzw. Arretierungsschiene 53 ausgebildete Eingriffsvorsprünge eingreifen können.

Ferner ist für alle bisher geschilderten Ausführungsformen anzumerken, dass die Arretierungseinrichtung 36 bezüglich der Dachebene spiegelsymmetrisch angeordnet sein kann, d.h. das Arretierungselement 52 wird nach oben statt nach unten vorgespannt und die Anlagefläche 53 ist oberhalb und nicht unterhalb des Arretierungselements 62 angeordnet.

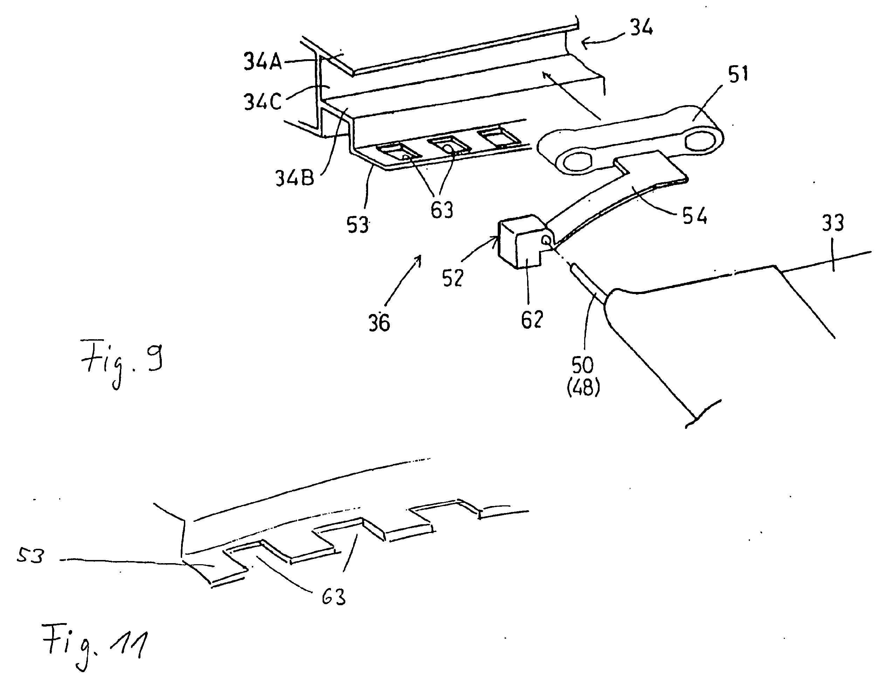

In Fig. 10 ist eine abgewandelte Ausführungsform der Erfindung gezeigt, wobei die Anlagefläche durch ein Aufnahmeelement 53 ersetzt ist, welches aus nachgiebigem Material, wie beispielsweise Gummi, besteht und in die Nut der Führungsschiene 34 eingesetzt ist, wobei das Aufnahmeelement 53 mit einer in Längsrichtung verlaufenden Führungsnut 65 versehen ist, deren Breite kleiner als der Durchmesser der Eingriffsstange 50 ist.

Wenn das Ende der Eingriffsstange 50 in die Führungsnut 65 eingeführt ist, wird die Eingriffsstange 50 aufgrund ihrer Abmessung in Andrückkontakt mit der Führungsnut 65 gebracht, wodurch eine Reibungskraft erzeugt wird. Während der Öffnungs-/Schließbewegung des Abdeckelements 33 wird die Eingriffsstange 50 entlang der Führungsnut 65 geführt. Bei dieser Ausführungsform bildet die Führungsnut 65 die Anlagefläche bzw. die Arretierungsschiene, während die Eingriffsstange 50 dem Arretierungselement 52 und dem Führungsschuh 51 funktionsmäßig entspricht.

Diese Ausführungsform ist den vorhergehenden Ausführungsformen hinsichtlich der Einfachheit der Struktur überlegen, jedoch ist sie hinsichtlich der Bedienerfreundlichkeit etwas ungünstiger, da ständig eine Reibungskraft zwischen der Eingriffsstange 50 und der Führungsnut 65 vorliegt, welche beim Öffnen bzw. Schließen überwunden werden muss.

Als Abwandlung kann das Öffnen oder Schließen des Abdeckelements 33 statt in Längsrichtung in Querrichtung erfolgen, und die Aufwickeleinrichtung 35 kann statt im hinteren Bereich im vorderen Bereich der Öffnung 10 angeordnet sein, so dass das Abdeckelement 33 nach hinten herausgezogen wird.

Ferner kann das Anschlagelement 46 weggelassen werden, wobei seine Funktion dann von der Arretierungseinrichtung 36 übernommen wird.

Bei den Ausführungsformen gemäß Fig. 2, 8 und 9 kann die relative Position des Führungsschuhs 51 und des Arretierungselements 52 in Längsrichtung invertiert werden, so dass der Führungsschuh vor dem Arretierungselement angeordnet ist. Ferner kann, wie bereits erwähnt., die Anlagefläche 53 oberhalb des Arretierungselements 52 angeordnet sein, wobei in diesem Fall das Arretierungselement 52 mittels des Vorspannelements 54 nach oben vorgespannt wird, so dass die Arretierung zwischen dem Arretierungselement 52 und der Anlagefläche 53 gelöst werden kann, indem das vordere Ende des Abdeckelements 33 nach unten gezogen wird. Das Vorspannelement 52 ist nicht auf eine Blattfeder beschränkt, sondern kann beispielsweise durch eine Schraubenfeder ersetzt sein. Das Griffelement 56 kann beispielsweise auch als Griffmulde in dem vorderen Ende des Abdeckelements 33 ausgebildet sein, so dass einer oder mehrere Finger in sie eingreifen können.

## Patentansprüche

1. Sonnenschutzvorrichtung für einen lichtdurchlässigen Fahrzeugdachbereich, mit einem Abdeckelement (33), dessen freies Ende (48) zwischen einer Öffnungsstellung und einer Schließstellung des Abdeckelements parallel zu dem lichtdurchlässigen Fahrzeugdachbereich bidirektional verschiebbar ist und in eine der beiden Richtungen vorgespannt ist, wobei eine manuell lösbare Arretierungseinrichtung (36) vorgesehen ist, um das freie Ende wahlweise in mindestens einer Zwischenstellung zwischen der Öffnungsstellung und der Schließstellung zu halten, **dadurch gekennzeichnet, dass** die Arretierungseinrichtung (36) mindestens eine in der Verschieberichtung verlaufende dachfeste Anlagefläche (53) sowie mindestens ein Arretierungselement (52) und eine Vorspannanordnung (54) umfasst, welche an dem freien Ende (48) des Abdeckelements (33) vorgesehen sind, wobei das Arretierungselement mittels der Vorspannanordnung zur Anlage an der Anlagefläche gebracht wird und die **dadurch** auf das Arretierungselement wirkende Reibekraft groß genug ist, um das Abdeckelement entgegen der auf das Abdeckelement wirkenden Vorspannung in der Zwischenstellung zu halten.

2. Sonnenschutzvorrichtung nach Anspruch 1, **dadurch gekennzeichnet, dass** eine im wesentlichen parallel zu der Anlagefläche (53) verlaufende dachfeste erste Führungsfläche (34A) vorgesehen ist, an welcher ein Führungselement (51) zur Anlage gebracht wird, wobei die Vorspannanordnung (54) des Arretierungselements (52) von einer Federanordnung gebildet wird, welche das Führungselement und das Arretierungselement verbindet.

3. Sonnenschutzvorrichtung nach Anspruch 1 oder 2, **dadurch gekennzeichnet, dass** die Anlagefläche (53) nach oben oder nach unten weist, während die Vorspannanordnung (54) für eine Vorspannung des Arretierungselements (52) nach unten bzw. nach oben sorgt.

4. Sonnenschutzvorrichtung nach einem der vorhergehenden Ansprüche, **dadurch gekennzeichnet, dass** der Reibungskoeffizient zwischen der Anlagefläche (53) und dem Arretierungselement (52) größer als der Reibungskoeffizient zwischen der ersten Führungsfläche (34A) und dem Führungselement (51) ist.

5. Sonnenschutzvorrichtung nach einem der vorhergehenden Ansprüche, **dadurch gekennzeichnet, dass** die Anlagefläche (53) in Verschieberichtung im wesentlichen homogen ausgebildet ist.

6. Sonnenschutzvorrichtung nach Anspruch 5, **dadurch gekennzeichnet, dass** das Arretierungselement (52) eine gekrümmte Fläche zur Anlage an die Anlagefläche (53) aufweist.

7. Sonnenschutzvorrichtung nach Anspruch 5, **dadurch gekennzeichnet, dass** das Arretierungselement (52) eine im wesentlichen ebene Fläche zur Anlage an die Anlagefläche (53) aufweist.

8. Sonnenschutzvorrichtung nach einem der vorhergehenden Ansprüche, **dadurch gekennzeichnet, dass** die Anlagefläche (53) aus Gummi besteht.

9. Sonnenschutzvorrichtung nach einem der vorhergehenden Ansprüche, **dadurch gekennzeichnet, dass** die Anlagefläche (53) mit Zähnen (61) versehen ist, die quer zu der Verschieberichtung verlaufen.

10. Sonnenschutzvorrichtung nach Anspruch 9, **dadurch gekennzeichnet, dass** sich die Zähne (61) unmittelbar aneinander anschließen.

11. Sonnenschutzvorrichtung nach Anspruch 10, **dadurch gekennzeichnet, dass** das Arretierungselement (52) mit entsprechenden Zähnen (60) versehen ist, die mittels der Vorspannanordnung (54) in Eingriff mit den Zähnen (61) der Anlagefläche (53) gebracht werden.

12. Sonnenschutzvorrichtung für einen lichtdurchlässigen Fahrzeugdachbereich, mit einem Abdeckelement (33), dessen freies Ende (48) zwischen einer Öffnungsstellung und einer Schließstellung des Abdeckelements parallel zu dem lichtdurchlässigen Fahrzeugdachbereich bidirektional verschiebbar ist und in eine der beiden Richtungen vorgespannt ist, wobei eine lösbare Arretierungseinrichtung (36) vorgesehen ist, um das freie Ende wahlweise in mindestens einer Zwischenstellung zwischen der Öffnungsstellung und der Schließstellung zu halten, wobei die Arretierungseinrichtung mindestens eine in der Verschieberichtung verlaufende dachfeste Arretierungsschiene (53) mit mindestens einem Rastmittel (63) sowie ein Arretierungselement (52) und eine Vorspannanordnung (54) umfasst, welche an dem freien Ende des Abdeckelements vorgesehen sind, und wobei das Arretierungselement mittels der Vorspannanordnung zum verriegelnden Eingriff mit dem mindestens einen Rastmittel hin vorgespannt wird, **dadurch gekennzeichnet, dass** der Eingriff zwischen dem Arretierungselement (52) und dem Rastmittel (63) in vertikaler Richtung hergestellt bzw. gelöst wird und die Vorspannanordnung (54) entsprechend in vertikaler Richtung wirkt.

13. Sonnenschutzvorrichtung nach Anspruch 12, **dadurch gekennzeichnet, dass** das bzw. die Rastmittel als Ausnehmungen (63) ausgebildet sind, wobei die offene Seite der Ausnehmung(en) (63) nach oben oder nach unten weist.

14. Sonnenschutzvorrichtung nach Anspruch 13, **dadurch gekennzeichnet, dass** eine Mehrzahl von in Verschieberichtung hintereinander angeordneten Rastausnehmungen (63) vorgesehen ist.

15. Sonnenschutzvorrichtung nach Anspruch 12 bis 14, **dadurch gekennzeichnet, dass** eine im wesentlichen parallel zu der Arretierungsschiene (53) verlaufende dachfeste erste Führungsfläche (34A) vorgesehen ist, an welcher ein Führungselement (51) zur Anlage gebracht wird, wobei die Vorspannanordnung (54) des Arretierungselements (52) von einer Federanordnung gebildet wird, welche das Führungselement und das Arretierungselement verbindet.

16. Sonnenschutzvorrichtung nach Anspruch 3 oder 15, **dadurch gekennzeichnet, dass** es sich bei der Federanordnung (54) um eine Blattfeder handelt.

17. Sonnenschutzvorrichtung nach einem der vorhergehenden Ansprüche, **dadurch gekennzeichnet, dass** das Arretierungselement (52) direkt fest mit dem freien Endes (48) des Abdeckelements (33) verbunden ist.

18. Sonnenschutzvorrichtung nach Anspruch 17, **dadurch gekennzeichnet, dass** das Führungselement nicht direkt mit dem Abdeckelement verbunden ist.

19. Sonnenschutzvorrichtung nach Anspruch 2 oder 15, **dadurch gekennzeichnet, dass** eine parallel zu der ersten Führungsfläche (34A) verlaufende zweite Führungsfläche (34B) vorgesehen ist, an welcher das Führungselement (51) ebenfalls zur Anlage gebracht wird, wobei das Führungselement zwischen der ersten und der zweiten Führungsfläche geführt ist.

20. Sonnenschutzvorrichtung nach Anspruch 19, **dadurch gekennzeichnet, dass** die erste (34A) und die zweite Führungsfläche (34B) einen Führungskanal (34) bilden und das Führungselement als Führungsschuh (51) ausgebildet ist.

21. Sonnenschutzvorrichtung nach Anspruch 1 bis 11, **dadurch gekennzeichnet, dass** die Arretierungseinrichtung (36) beiderseits des freien Endes (48) des Abdeckelements (33) jeweils eine solche dachfeste Anlagefläche (53) und ein solches Arretierungselement (52) aufweist, wobei die beiden Arretierungselemente über das freie Ende des Abdeckelements fest miteinander verbunden sind und das freie Ende des Abdeckelements vorzugsweise mit einem Griffelement (56) versehen ist.

22. Sonnenschutzvorrichtung nach Anspruch 12 bis 15, **dadurch gekennzeichnet, dass** die Arretierungseinrichtung (36) beiderseits des freien Endes (48) des Abdeckelements (33) jeweils eine solche dachfeste Arretierungsschiene (53) und ein solches Arretierungselement (52) aufweist, wobei die beiden Arretierungselemente über das freie Ende des Abdeckelements fest miteinander verbunden sind und das freie Ende des Abdeckelements vorzugsweise mit einem Griffelement (56) versehen ist.

23. Sonnenschutzvorrichtung nach Anspruch 2, **dadurch gekennzeichnet, dass** die Anlagefläche (53) bezüglich der ersten Führungsfläche (34A) seitlich versetzt ist.

24. Sonnenschutzvorrichtung nach Anspruch 23, **dadurch gekennzeichnet, dass** die Anlagefläche (53) einstückig mit der ersten Führungsfläche (34A) ausgebildet ist.

25. Sonnenschutzvorrichtung nach Anspruch 15, **dadurch gekennzeichnet, dass** die Arretierungsschiene (53) bezüglich der ersten Führungsfläche (34A) seitlich versetzt ist.

26. Sonnenschutzvorrichtung nach Anspruch 25, **dadurch gekennzeichnet, dass** die Arretierungsschiene (53) einstückig mit der ersten Führungsfläche (34A) ausgebildet ist.

27. Sonnenschutzvorrichtung für einen lichtdurchlässigen Fahrzeugdachbereich, mit einem Abdeckelement (33), dessen freies Ende (48) zwischen einer Öffnungsstellung und einer Schließstellung des Abdeckelements parallel zu dem lichtdurchlässigen Fahrzeugdachbereich bidirektional verschiebbar ist und in eine der beiden Richtungen vorgespannt ist, wobei eine lösbare Arretierungseinrichtung (34, 50, 65) vorgesehen ist, um das freie Ende wahlweise in mindestens einer Zwischenstellung zwischen der Öffnungsstellung und der Schließstellung zu halten **dadurch gekennzeichnet, dass** die Arretierungseinrichtung (34, 50, 65) mindestens einen in der Verschieberichtung verlaufenden dachfesten Führungskanal (34), der mit einem elastischen Material (53) gefüllt ist, welches mit einer in der Verschieberichtung verlaufenden Ausnehmung (65) versehen ist, sowie mindestens ein an dem freien Ende (48) des Abdeckelements (33) vorgesehenes Arretierungselement (50) umfasst, welches in die Ausnehmung eingreift und dessen Abmessung quer zu der Verschieberichtung größer als die entsprechende Abmessung der Ausnehmung ist, wobei die Elastizität des Materials und die Abmessungen der Ausnehmung bzw. des Arretierungselements so gewählt sind, dass die auf das Arretierungselement wirkende Reibungskraft groß genug ist, um das Abdeckelement entgegen der auf das Abdeckelement wirkenden Vorspannung in der Zwischenstellung zu halten.

28. Sonnenschutzvorrichtung nach Anspruch 27, **dadurch gekennzeichnet, dass** das elastische Material (53) Gummi ist.

29. Sonnenschutzvorrichtung nach Anspruch 18, **dadurch gekennzeichnet, dass** auf jeder Seite des freien Endes (48) des Abdeckelements (33) ein solches Arretierungselement (50) vorgesehen ist, das jeweils als ein Ende einer Stange ausgebildet ist, am freien Ende des Abdeckelements vorgesehen ist.

30. Sonnenschutzvorrichtung nach einem der vorhergehenden Ansprüche, **dadurch gekennzeichnet, dass** das Abdeckelement (33) von einer Rollobahn gebildet wird, welches auf eine in der Wickeldrehrichtung vorgespannte Wickelanordnung (35) aufwickelbar ist, wobei das freie Ende von einen Festelement (48) gebildet wird.

31. Sonnenschutzvorrichtung nach Anspruch 30, **dadurch gekennzeichnet, dass** das Festelement (48) mit einem Griffelement (56) versehen ist.

32. Sonnenschutzvorrichtung nach einem der vorhergehenden Ansprüche, **dadurch gekennzeichnet, dass** es sich bei dem lichtdurchlässigen Fahrzeugdachbereich um einen transparenten Deckel (4) eines öffnungsfähigen Fahrzeugdaches handelt.

## Claims

1. Sunshield device for a transparent area of a vehicle roof, comprising a covering element (33) whose free end (48) can be displaced bidirectionally parallel to the transparent area of the vehicle roof between an open position and a closed position of the covering element and is prestressed in one of the two directions, a manually releasable locking device (36) being provided in order to retain the free end as desired in at least one intermediate position between the open position and the closed position, **characterized in that** the locking device (36) comprises at least one contact surface (53), which runs in the displacement direction and is fixed to the roof, and also at least one locking element (52) and a prestressing arrangement (54), which are provided at the free end (48) of the covering element (33), the locking element being brought into contact with the contact surface by means of the prestressing arrangement and the frictional force acting on the locking element as a result being sufficiently high to retain the covering element in the intermediate position counter to the prestress acting on the covering element.

2. Sunshield device according to Claim 1, **characterized in that** a first guide surface (34A) running substantially parallel to the contact surface (53) and fixed to the roof is provided, with which a guide element (51) is brought into contact, the prestressing arrangement (54) of the locking element (52) being formed by a spring arrangement which connects the guide element and the locking element.

3. Sunshield device according to Claim 1 or 2, **characterized in that** the contact surface (53) points upwards or downwards, while the prestressing arrangement (54) ensures that the locking element (52) is prestressed downwards or upwards.

4. Sunshield device according to one of the preceding claims, **characterized in that** the coefficient of friction between the contact surface (53) and the locking element (52) is higher than the coefficient of friction between the first guide surface (34A) and the guide element (51).

5. Sunshield device according to one of the preceding claims, **characterized in that** the contact surface (53) is substantially homogeneous in the displacement direction.

6. Sunshield device according to Claim 5, **characterized in that** the locking element (52) has a curved surface in order to make contact with the contact surface (53).

7. Sunshield device according to Claim 5, **characterized in that** the locking element (52) has a substantially flat surface in order to make contact with the contact surface (53).

8. Sunshield device according to one of the preceding claims, **characterized in that** the contact surface (53) consists of rubber.

9. Sunshield device according to one of the preceding claims, **characterized in that** the contact surface (53) is provided with teeth (61) which run transversely with respect to the displacement direction.

10. Sunshield device according to Claim 9, **characterized in that** the teeth (61) adjoin one another directly.

11. Sunshield device according to Claim 10, **characterized in that** the locking element (52) is provided with corresponding teeth (60), which are brought into engagement with the teeth (61) of the contact surface (53) by means of the prestressing arrangement (54).

12. Sunshield device for a transparent area of a vehicle roof, comprising a covering element (33) whose free end (48) can be displaced bidirectionally parallel to the transparent area of the vehicle roof between an open position and a closed position of the covering element and is prestressed in one of the two directions, a releasable locking device (36) being provided in order to retain the free end as desired in at least one intermediate position between the open position and the closed position, the locking device comprising at least one locking rail (53) which runs in the displacement direction, is fixed to the roof and has at least one latching means (63), and also a locking element (52) and a prestressing arrangement (54) which are provided at the free end of the covering element, and the locking element being prestressed into locking engagement with the at least one latching means by means of the prestressing arrangement, **characterized in that** the engagement between the locking element (52) and the latching means (63) is produced and released in the vertical direction and the prestressing arrangement (54) acts in a corresponding manner in the vertical direction.

13. Sunshield device according to Claim 12, **characterized in that** the latching means is/are formed as cut-outs (63), the open side of the cut-out(s) (63) pointing upwards or downwards.

14. Sunshield device according to Claim 13, **characterized in that** a plurality of latching cut-outs (63) arranged one after another in the displacement direction is provided.

15. Sunshield device according to Claims 12 to 14, **characterized in that** a first guide surface (34A) running substantially parallel to the locking rail (53) and fixed to the roof is provided, with which a guide element (51) is brought into contact, the prestressing arrangement (54) of the locking element (52) being formed by a spring arrangement which connects the guide element and the locking element.

16. Sunshield device according to Claim 3 or 15, **characterized in that** the spring arrangement (54) is a leaf spring.

17. Sunshield device according to one of the preceding claims, **characterized in that** the locking element (52) is connected directly and firmly to the free end (48) of the covering element (33).

18. Sunshield device according to Claim 17, **characterized in that** the guide element is not connected directly to the covering element.

19. Sunshield device according to Claim 2 or 15, **characterized in that** a second guide surface (34B) running parallel to the first guide surface (34A) is provided, with which the guide element (51) is likewise brought into contact, the guide element being guided between the first and the second guide surface.

20. Sunshield device according to Claim 19, **characterized in that** the first (34A) and the second guide surface (34B) form a guide channel (34), and the guide element is formed as a guide shoe (51).

21. Sunshield device according to Claims 1 to 11, **characterized in that** the locking device (36) on both sides of the free end (48) of the covering element (33) in each case has such a contact surface (53) fixed to the roof and such a locking element (52), the two locking elements being firmly connected to each other via the free end of the covering element and the free end of the covering element preferably being provided with a handle element (56).

22. Sunshield device according to Claims 12 to 15, **characterized in that** the locking device (36) on both sides of the free end (48) of the covering element (33) in each case has such a locking rail (53) fixed to the roof and such a locking element (52), the two locking elements being firmly connected to each other via the free end of the covering element and the free end of the covering element preferably being provided with a handle element (56).

23. Sunshield device according to Claim 2, **characterized in that** the contact surface (53) is offset laterally with respect to the first guide surface (34A).

24. Sunshield device according to Claim 23, **characterized in that** the contact surface (53) is formed in one piece with the first guide surface (34A).

25. Sunshield device according to Claim 15, **characterized in that** the locking rail (53) is offset laterally with respect to the first guide surface (34A).

26. Sunshield device according to Claim 25, **characterized in that** the locking rail (53) is formed in one piece with the first guide surface (34A).

27. Sunshield device for a transparent area of a vehicle roof, comprising a covering element (33) whose free end (48) can be displaced bidirectionally parallel to the transparent area of the vehicle roof between an open position and a closed position of the covering element and is prestressed in one of the two directions, a releasable locking device (34, 50, 65) being provided in order to retain the free end as desired in at least one intermediate position between the open position and the closed position, **characterized in that** the locking device (34, 50, 65) comprises at least one guide channel (34) which runs in the displacement direction, is fixed to the roof and is filled with an elastic material (53), which is provided with a cut-out (65) running in the displacement direction, and also at least one locking element (50), which is provided at the free end (48) of the covering element (33), engages in the cut-out and whose dimension transverse to the displacement direction is greater than the corresponding dimension of the cut-out, the elasticity of the material and the dimensions of the cut-out and locking element being chosen such that the frictional force acting on the locking element is sufficiently high to retain the covering element in the intermediate position counter to the prestress acting on the covering element.

28. Sunshield device according to Claim 27, **characterized in that** the elastic material (53) is rubber.

29. Sunshield device according to Claim 18, **characterized in that**, on each side of the free end (48) of the covering element (33), such a locking element (50) is provided, which in each case is formed as one end of a rod which is provided at the free end of the covering element.

30. Sunshield device according to one of the preceding claims, **characterized in that** the covering element (33) is formed by a roller blind web, which can be wound up onto a spool arrangement (35) which is prestressed in the spool direction of rotation, the free end being formed by a fixed element (48).

31. Sunshield device according to Claim 30, **characterized in that** the fixed element (48) is provided with a handle element (56).

32. Sunshield device according to one of the preceding claims, **characterized in that** the transparent area of a vehicle roof is a transparent panel (4) of a vehicle roof that can be opened.

## Revendications

1. Dispositif pare-soleil pour une région transparente de toit de véhicule, avec un élément de recouvrement (33) dont l'extrémité libre (48) est mobile en translation dans les deux sens parallèlement à la région transparente de toit de véhicule entre une position ouverte et une position fermée de l'élément de recouvrement, et est précontrainte dans un des deux sens, sachant qu'il est prévu un système de blocage (36) manuellement libérable pour maintenir à volonté l'extrémité libre dans au moins une position intermédiaire entre la position ouverte et la position fermée, **caractérisé en ce que** le système de blocage (36) comprend au moins une surface d'application (53) solidaire du toit, s'étendant dans la direction de translation, ainsi qu'au moins un élément de blocage (52) et un moyen de précontrainte (54) qui sont prévus à l'extrémité libre de l'élément de recouvrement (33), l'élément de blocage étant amené à l'aide du moyen de précontrainte en application contre la surface d'application et la force de friction agissant ainsi sur l'élément de blocage étant suffisante pour maintenir l'élément de recouvrement dans la position intermédiaire à l'encontre de la précontrainte agissant sur l'élément de recouvrement.

2. Dispositif pare-soleil selon la revendication 1, **caractérisé en ce qu'**il est prévu une première surface de guidage (34A) solidaire du toit, qui s'étend sensiblement parallèlement à la surface d'application (53) et contre laquelle est amené en application un élément de guidage (51), le moyen de précontrainte (54) de l'élément de blocage (52) étant formé par un moyen de ressort qui relie l'élément de guidage et l'élément de blocage.

3. Dispositif pare-soleil selon la revendication 1 ou 2, **caractérisé en ce que** la surface d'application (53) est dirigée vers le haut ou vers le bas, tandis que le moyen de précontrainte (54) assure une précontrainte de l'élément de blocage (52) vers le bas ou vers le haut.

4. Dispositif pare-soleil selon l'une des revendications précédentes, **caractérisé en ce que** le coefficient de friction entre la surface d'application (53) et l'élément de blocage (52) est supérieur au coefficient de friction entre la première surface de guidage (34A) et l'élément de guidage (51).

5. Dispositif pare-soleil selon l'une des revendications précédentes, **caractérisé en ce que** la surface d'application (53) est réalisée essentiellement homogène dans la direction de translation.

6. Dispositif pare-soleil selon la revendication 5, **caractérisé en ce que** l'élément de blocage (52) présente une surface courbe pour l'application contre la surface d'application (53).

7. Dispositif pare-soleil selon la revendication 5, **caractérisé en ce que** l'élément de blocage (52) présente une surface essentiellement plane pour l'application contre la surface d'application (53).

8. Dispositif pare-soleil selon l'une des revendications précédentes, **caractérisé en ce que** la surface d'application (53) est réalisée en caoutchouc.

9. Dispositif pare-soleil selon l'une des revendications précédentes, **caractérisé en ce que** la surface d'application (53) est pourvue de dents (61) qui s'étendent transversalement à la direction de translation.

10. Dispositif pare-soleil selon la revendication 9, **caractérisé en ce que** les dents (61) se raccordent directement les unes aux autres.

11. Dispositif pare-soleil selon la revendication 10, **caractérisé en ce que** l'élément de blocage (52) est pourvu de dents correspondantes (60) qui, à l'aide du moyen de précontrainte (54), sont amenées en engagement avec les dents (61) de la surface d'application (53).

12. Dispositif pare-soleil pour une région transparente de toit de véhicule, avec un élément de recouvrement (33) dont l'extrémité libre (48) est mobile en translation dans les deux sens parallèlement à la région transparente de toit de véhicule entre une position ouverte et une position fermée de l'élément de recouvrement, et est précontrainte dans un des deux sens, sachant qu'il est prévu un système de blocage libérable (36) pour maintenir à volonté l'extrémité libre dans au moins une position intermédiaire entre la position ouverte et la position fermée, sachant que le système de blocage comprend au moins un profilé de blocage (53) solidaire du toit, s'étendant dans la direction de translation et pourvu d'au moins un moyen de crantage (63), ainsi qu'un élément de blocage (52) et un moyen de précontrainte (54) qui sont prévus à l'extrémité libre de l'élément de recouvrement, et sachant que l'élément de blocage est, à l'aide du moyen de précontrainte, précontraint dans la direction de l'engagement de verrouillage avec le moyen de crantage au moins unique, **caractérisé en ce que** l'engagement entre l'élément de blocage (52) et le moyen de crantage (63) est réalisé ou libéré en direction verticale, et le moyen de précontrainte (54) agit en conséquence en direction verticale.

13. Dispositif pare-soleil selon la revendication 12, **caractérisé en ce que** le ou les moyens de crantage sont réalisés sous la forme d'évidements (63), le côté ouvert du ou des évidements (63) étant dirigé vers le haut ou vers le bas.

14. Dispositif pare-soleil selon la revendication 13, **caractérisé en ce qu'**il est prévu une pluralité d'évidements de crantage (63) disposés les uns à la suite des autres dans la direction de translation.

15. Dispositif pare-soleil selon l'une des revendications 12 à 14, **caractérisé en ce qu'**il est prévu une première surface de guidage (34A) solidaire du toit, s'étendant sensiblement parallèlement au profilé de blocage (53) et contre laquelle est amené en application un élément de guidage (51), le moyen de précontrainte (54) de l'élément de blocage (52) étant formé par un moyen de ressort qui relie l'élément de guidage et l'élément de blocage.

16. Dispositif pare-soleil selon la revendication 3 ou 15, **caractérisé en ce que** le moyen de ressort (54) est un ressort à lame.

17. Dispositif pare-soleil selon l'une des revendications précédentes, **caractérisé en ce que** l'élément de blocage (52) est directement relié fixement à l'extrémité libre (48) de l'élément de recouvrement (33).

18. Dispositif pare-soleil selon la revendication 17, **caractérisé en ce que** l'élément de guidage n'est pas directement relié à l'élément de recouvrement.

19. Dispositif pare-soleil selon la revendication 2 ou 15, **caractérisé en ce qu'**il est prévu une deuxième surface de guidage (34B), s'étendant parallèlement à la première surface de guidage (34A) et contre laquelle l'élément de guidage (51) est également amené en application, l'élément de guidage étant guidé entre la première et la deuxième surface de guidage.

20. Dispositif pare-soleil selon la revendication 19, **caractérisé en ce que** la première surface de guidage (34A) et la deuxième surface de guidage (34B) forment un canal de guidage (34), et l'élément de guidage est réalisé sous forme de sabot de guidage (51).

21. Dispositif pare-soleil selon l'une des revendications 1 à 11, **caractérisé en ce que** le système de blocage (36) présente respectivement une telle surface d'application (53) solidaire du toit et un tel élément de blocage (52) de chaque côté de l'extrémité libre (48) de l'élément de recouvrement (33), les deux éléments de blocage étant fixement reliés entre eux par l'intermédiaire de l'extrémité libre de l'élément de recouvrement et l'extrémité libre de l'élément de recouvrement étant de préférence pourvue d'un élément de préhension (56).

22. Dispositif pare-soleil selon l'une des revendications 12 à 15, **caractérisé en ce que** le système de blocage (36) présente respectivement un tel profilé de blocage (53) solidaire du toit et un tel élément de blocage (52) de chaque côté de l'extrémité libre (48) de l'élément de recouvrement (33), les deux éléments de blocage étant fixement reliés entre eux par l'intermédiaire de l'extrémité libre de l'élément de recouvrement et l'extrémité libre de l'élément de recouvrement étant de préférence pourvue d'un élément de préhension (56).

23. Dispositif pare-soleil selon la revendication 2, **caractérisé en ce que** la surface d'application (53) est latéralement décalée par rapport à la première surface de guidage (34A).

24. Dispositif pare-soleil selon la revendication 23, **caractérisé en ce que** la surface d'application (53) est réalisée d'un seul tenant avec la première surface de guidage (34A).

25. Dispositif pare-soleil selon la revendication 15, **caractérisé en ce que** le profilé de blocage (53) est latéralement décalé par rapport à la première surface de guidage (34A).

26. Dispositif pare-soleil selon la revendication 25, **caractérisé en ce que** le profilé de blocage (53) est réalisé d'un seul tenant avec la première surface de guidage (34A).

27. Dispositif pare-soleil pour une région transparente de toit de véhicule, avec un élément de recouvrement (33) dont l'extrémité libre (48) est mobile en translation dans les deux sens parallèlement à la région transparente de toit de véhicule entre une position ouverte et une position fermée de l'élément de recouvrement, et est précontrainte dans un des deux sens, sachant qu'il est prévu un système de blocage libérable (34, 50, 65) pour maintenir à volonté l'extrémité libre dans au moins une position intermédiaire entre la position ouverte et la position fermée, **caractérisé en ce que** le système de blocage (34, 50, 65) comprend au moins un canal de guidage (34) solidaire du toit, s'étendant dans la direction de translation et rempli d'un matériau élastique (53) doté d'un évidement s'étendant dans la direction de translation, ainsi qu'au moins un élément de blocage (50) prévu à l'extrémité libre (48) de l'élément de recouvrement (33), élément qui s'engage dans l'évidement et dont la dimension transversalement à la direction de translation est supérieure à la dimension correspondante de l'évidement, sachant que l'élasticité du matériau et les dimensions de l'évidement et de l'élément de blocage sont choisies de telle sorte que la force de friction agissant sur l'élément de blocage est suffisante pour maintenir l'élément de recouvrement dans la position intermédiaire à l'encontre de la précontrainte agissant sur l'élément de recouvrement.

28. Dispositif pare-soleil selon la revendication 27, **caractérisé en ce que** le matériau élastique (53) est du caoutchouc.

29. Dispositif pare-soleil selon la revendication 18, **caractérisé en ce qu'**un tel élément de blocage (50) est prévu de chaque côté de l'extrémité libre (48) de l'élément de recouvrement (33), et il est respectivement prévu sous la forme d'une extrémité d'une tige, à l'extrémité libre de l'élément de recouvrement.

30. Dispositif pare-soleil selon l'une des revendications précédentes, **caractérisé en ce que** l'élément de recouvrement (33) est formé par une bande de store qui peut être enroulée sur un moyen d'enroulement (35) précontraint dans la direction de rotation d'enroulement, l'extrémité libre étant formée par un élément fixe (48).

31. Dispositif pare-soleil selon la revendication 30, **caractérisé en ce que** l'élément fixe (48) est pourvu d'un élément de préhension (56).

32. Dispositif pare-soleil selon l'une des revendications précédentes, **caractérisé en ce que** la région transparente de toit de véhicule est un panneau transparent (4) d'un toit ouvrant de véhicule.
